# EUROPÄISCHE PATENTANMELDUNG

(11) **EP 3 587 043 A1**
(43) Veröffentlichungstag der Anmeldung: **01.01.2020**
(21) Anmeldenummer: 18180090.5
(22) Anmeldetag: 27.06.2018
(51) Int. Cl.: B25J 9/16

(54) **ANORDNUNG UND VERFAHREN ZUR HAPTISCHEN IMMERSION EINES NUTZERS**

(71) Anmelder: Siemens Aktiengesellschaft, 80333 München (DE)
(72) Erfinder: Die Erfindernennung liegt noch nicht vor

(57) **Zusammenfassung**

Ein Nutzer (N) betrachtet über ein Head-Mounted Display (AM) ein virtuelles Objekt (VO) in einer virtuellen Realität, welches er über Eingabegeräte (C) ergreift. Zwei Roboterarme (RA) übertragen Kräfte auf die Eingabegeräte (C), welche taktile und/oder haptische Sinneseindrücke für den Nutzer erzeugen, die dieser beispielsweise als Schwerkraft des virtuellen Objekts interpretiert und wahrnimmt. Die Roboterarme sind über Translationsmittel (TM) horizontal verfahrbar, sodass der Nutzer umhergehen kann. Das Translationsmittel ermöglicht es dem Nutzer, sich durch den Raum zu bewegen. Dank des Translationsmittels kann der Nutzer stets haptische Rückmeldungen erhalten. Hierzu verfährt das Translationsmittel den Roboterarm horizontal, sodass dieser in Reichweite des Nutzers bleibt oder erneut in Reichweite des Nutzers gelangt. Der Bewegungsspielraum des Nutzers in der virtuellen Realität wird hierdurch deutlich erhöht.

## Beschreibung

Seit den 60er bzw. 90er Jahren sind mit dem HMD (Abkürzung für "Head-Mounted Display") und der CAVE (Abkürzung für "Cave Automatic Virtual Environment") Anordnungen zur Simulation einer virtuellen Realität (VR) bekannt, welche den Nutzer visuell dreidimensional und damit räumlich immersiv umschließt.

Laut VDI-Richtlinie 2860 handelt es sich bei Industrierobotern um universell einsetzbare Bewegungsautomaten mit mehreren Achsen, deren Bewegungen frei programmierbar und gegebenenfalls sensorgeführt sind. Derartige Roboter lassen sich beispielsweise mit einem Greifer oder einem anderen Werkzeug als Effektor ausrüsten und können hierdurch Handhabungs- oder Fertigungsaufgaben ausführen.

Aus dem Stand der Technik ist bekannt, einen Industrieroboter als Roboterarm mit einer seriellen Kinematik zu konstruieren, welche aus mehreren Hauptachsen und Handachsen besteht. Die Hauptachsen dienen vorrangig dem Zweck, eine Position des Effektors einzustellen, welcher an einem Flansch am Ende des Roboterarms montiert ist. Demgegenüber haben die Handachsen die Aufgabe, eine Orientierung des Effektors einzustellen. Während die Hauptachsen je nach Konstruktionsart und Anwendungszweck des Industrieroboters wahlweise als Rotationsachsen (R) oder Translationsachsen (T) oder als Kombination dieser beiden Arten gewählt werden, handelt es sich bei den Handachsen stets um Rotationsachsen.

Die Position und Orientierung, beispielsweise eines Eingabegerätes oder eines Effektors, wird im Folgenden auch unter dem Begriff "Pose" zusammengefasst.

Aus dem Dokument "KUKA Mobile Robotik iiwa", erhältlich im Internet am 31.07.2015 unter http://www.kuka-robotics.com/res/sps/a737ee03-5832-4c95-9d91-84e0de80c664_KUKA_KMRiiwa_DE.pdf, ist ein Fahrzeug zum Transport von Werkstücken bekannt, welches ein Fahrsystem aufweist, auf dem ein Roboterarm montiert ist. Das Fahrzeug kann dazu verwendet werden, Bauteile aus einem Regallager zu entnehmen und weiter zu transportieren.

Aus dem Dokument M. Sagardia, K. Hertkorn, T. Hulin, S. Schätzle, R. Wolff, J. Hummel, J. Dodiya, A. Gerndt: "VR-OOS: The DLR's Virtual Reality Simulator for Telerobotic On-Orbit Servicing with Haptic Feedback", IEEE Aerospace Conference, Big Sky, Montana, USA, 2015, ist ein Simulator für virtuelle Realität bekannt. Ein HMD gibt eine virtuelle Realität stereoskopisch an einen sitzenden Nutzer aus, welche virtuelle Objekte enthält. Zwei Roboterarme werden über eine Sicherheitskupplung und geeignete Endeffektoren mit den Händen des Nutzers verbunden. Der Simulator gibt durch geeignete Ansteuerung der Roboterarme haptische Sinneseindrücke der virtuellen Objekte an den Nutzer aus, welche anhand physikalischer Modelle berechnet werden. Dies alles dient als haptische Benutzerschnittstelle zur Steuerung eines humanoiden Roboters.

Durch die vorliegende Erfindung soll eine Alternative zum Stand der Technik geschaffen werden.

Diese Aufgabe wird erfindungsgemäß durch eine Anordnung zur haptischen Immersion eines Nutzers gelöst, mit mindestens einem Ausgabemittel, eingerichtet zur visuellen Ausgabe einer virtuellen Realität an einen Nutzer, welche mindestens ein virtuelles Objekt enthält, mit mindestens einem Roboterarm, welcher für einen unmittelbaren oder mittelbaren Kontakt mit dem Nutzer eingerichtet ist, und mit einer Recheneinheit, welche programmiert ist, durch geeignete Ansteuerung des Roboterarms taktile und/oder haptische Sinneseindrücke des virtuellen Objekts an den Nutzer auszugeben.

Die Anordnung ist gekennzeichnet durch ein Translationsmittel, an dem der Roboterarm montiert ist, und welches für eine horizontale Translation des Roboterarms eingerichtet ist.

Bei dem Verfahren zur haptischen Immersion eines Nutzers gibt mindestens ein Ausgabemittel eine virtuelle Realität an einen Nutzer visuell aus, welche mindestens ein virtuelles Objekt enthält. Mindestens ein Roboterarm geht zumindest vorübergehend einen unmittelbaren oder mittelbaren Kontakt mit dem Nutzer ein. Eine Recheneinheit gibt durch geeignete Ansteuerung des Roboterarms taktile und/oder haptische Sinneseindrücke des virtuellen Objekts an den Nutzer aus.

Das Verfahren ist dadurch gekennzeichnet, dass ein Translationsmittel, an dem der Roboterarm montiert ist, diesen horizontal verfährt.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Taktile Sinneseindrücke bezeichnen die Wahrnehmung über den Tastsinn, während haptische Sinneseindrücke durch das aktive Ertasten gewonnen werden. Unter die haptischen Sinneseindrücke fällt neben der Oberflächensensibilität, welche beispielsweise die Erfassung von mechanischen Reizen über die Haut umfasst, auch die Tiefensensibilität. So beeinflusst eine schwere Last den Lagesinn des Nutzers, indem sie seinen Rücken beugt, seinen Kraftsinn, indem seine tragenden Muskeln und Sehnen unter Spannung geraten, sowie seinen Bewegungssinn, indem der Nutzer ein Auffangen der Last mit einer Ausgleichsbewegung im Körper nachvollzieht. Je nach Anwendungsfall und Ausgestaltung kann die gesamte Bandbreite taktiler und haptischer Sinneseindrücke durch geeignete Ansteuerung des Roboterarms an den Nutzer ausgegeben werden, indem der Roboterarm mittels seiner Antriebe beispielsweise eine Last des virtuellen Objekts simuliert, welches der Nutzer ergreift und trägt. Alternativ werden die Anordnung und das Verfahren so ausgelegt, dass nur eine Art oder wenige der genannten Arten von Sinneseindrücken für den Nutzer hervorgerufen werden.

Während ein möglicher Anwendungsfall den unmittelbaren oder mittelbaren Kontakt der Hände des Nutzers mit dem Roboterarm betrifft, ist es jedoch auch denkbar, den Roboterarm - als Leichtbauausführung - sanft gegen einen Oberarm des Nutzers schlagen zu lassen, oder den Nutzer in den Roboterarm laufen zu lassen, wenn dieser in der virtuellen Realität einen Avatar oder eine Wand rempelt. Auch hierdurch werden taktile und haptische Sinneseindrücke hervorgerufen, darunter der Tastsinn, der Lagesinn und der Bewegungssinn des Nutzers. Hierzu kann der Roboterarm auch mit einer Platte als Effektor ausgerüstet werden, wie dies weiter unten als Weiterbildung beschrieben wird.

Die Anordnung stellt ein haptisches Interaktionsgerät bereit, welches eine haptische Immersion des Nutzers in der virtuellen Realität ermöglicht, also ein Eintauchen des Nutzers in die virtuelle Realität anhand seiner taktilen und/oder haptischen Wahrnehmung. Die haptische Immersion unterstützt auch die räumliche Immersion des Nutzers in der virtuellen Realität.

Das Translationsmittel ermöglicht es dem Nutzer, sich durch den Raum zu bewegen, also beispielsweise auf und ab zu gehen, und die virtuelle Realität von verschiedenen Standpunkten zu betrachten, ohne die taktilen und/oder haptischen Sinneseindrücke des virtuellen Objekts dauerhaft zu verlieren. Dank des Translationsmittels kann der Nutzer stets haptische Rückmeldungen erhalten, also beispielsweise während dem Gehen virtuelle Objekte berühren, ergreifen oder bedienen, oder ein neues virtuelles Objekt an einem anderen Standort aufsuchen und mit haptischer Rückmeldung bedienen. Hierzu verfährt das Translationsmittel den Roboterarm horizontal, sodass dieser in Reichweite des Nutzers bleibt oder erneut in Reichweite des Nutzers gelangt. Wenn das Translationsmittel schnell genug ist, kann der Roboterarm stets in Reichweite des Nutzers bleiben, andernfalls wird er mit kurzer Verzögerung nachgeführt. Der Bewegungsspielraum des Nutzers in der virtuellen Realität wird hierdurch deutlich erhöht.

In einer Weiterbildung ist das Translationsmittel zur Translation des Roboterarms in einer horizontalen X-Richtung und/oder in einer horizontalen Y-Richtung eingerichtet.

Gemäß einer Ausführungsform ist das Translationsmittel eine Linearachse, welche an einer Decke, an einer Wand oder auf einem Boden montiert ist.

Die Linearachse arbeitet als Achserweiterung für den Roboterarm und vergrößert dessen Arbeitsraum.

In einer Weiterbildung ist das Translationsmittel ein Portalroboter, an dem der Roboterarm hängend montiert ist.

Durch den Portalroboter wird ein sehr großer Arbeitsraum für den Roboterarm geschaffen, innerhalb dessen sich der Nutzer frei bewegen kann. Der Portalroboter kann den Roboterarm als Achserweiterung in der horizontalen X-Richtung und/oder in der horizontalen Y-Richtung verfahren. Weiterhin hält der Portalroboter aufgrund seiner Bauweise den Boden frei, sodass der Nutzer diesen ohne Kollisions- oder Stolpergefahr betreten und begehen kann. Dies ist insbesondere dann von Vorteil, wenn der Nutzer ein HMD trägt, welches ihm die Sicht auf die natürliche Umgebung nimmt. Der Portalroboter kann in vereinfachter Ausführung auch aus zwei orthogonal zueinander montierten Linearachsen gebildet werden, welche an einer Decke montiert sind.

Gemäß einer Ausführungsform ist das Translationsmittel ein Fahrzeug, welches ein Fahrgestell mit einem Fahrsystem-Antrieb aufweist, welcher mittels einer Steuereinheit steuerbar ist, wobei der Roboterarm auf dem Fahrzeug montiert ist.

Als Fahrzeug eignet sich beispielsweise das eingangs genannte aus dem Stand der Technik bekannte Fahrzeug mit Roboterarm.

In einer Weiterbildung weist das Fahrzeug zusätzlich einen Akkumulator auf. Es umfasst ferner Sensoren und eine Steuereinheit, welche eingerichtet sind für eine Fahrwegüberwachung, einen Kollisionsschutz, und/oder eine Navigation.

Dies bietet unter anderem den Vorteil, dass das Fahrzeug Kollisionen mit dem Nutzer vermeiden und einen Sicherheitsabstand zum Nutzer einhalten kann.

Gemäß einer Ausführungsform werden zwei Roboterarme vorgesehen. Die Recheneinheit ist programmiert, durch geeignete Ansteuerung der Roboterarme taktile und/oder haptische Sinneseindrücke an beide Hände des Nutzers auszugeben. Der zweite Roboterarm ist ebenfalls an dem Translationsmittel montiert.

In einer Weiterbildung ist an dem Translationsmittel ein Rotor montiert ist, welcher um eine vertikale Achse drehbar ist. Die beiden Roboterarme sind an dem Rotor montiert.

Gemäß einer Ausführungsform werden zwei Roboterarme vorgesehen. Die Recheneinheit ist programmiert, durch geeignete Ansteuerung der Roboterarme taktile und/oder haptische Sinneseindrücke an beide Hände des Nutzers auszugeben. Der zweite Roboterarm ist an einem zweiten Translationsmittel montiert ist, welches für eine horizontale Translation des zweiten Roboterarms eingerichtet ist.

In einer Weiterbildung ist das Translationsmittel eine Linearachse oder ein Portalroboter, und das zweite Translationsmittel ein Fahrzeug.

Gemäß einer Ausführungsform ist das Ausgabemittel ein stereoskopisches Ausgabemittel, insbesondere ein HMD oder eine CAVE, oder ein holographisches Ausgabemittel.

Das Ausgabemittel gibt die virtuelle Realität stereoskopisch oder holographisch, also visuell dreidimensional und damit räumlich immersiv an den Nutzer aus.

In einer Weiterbildung umfasst die Anordnung mindestens ein Eingabegerät, welches für ein manuelles Halten durch einen Nutzer eingerichtet ist, sowie Mittel für eine Verbindung des Eingabegeräts mit einem Flansch des Roboterarms.

Diese Weiterbildung bietet den Vorteil, dass der Roboterarm Kräfte, welche die taktilen und/oder haptischen Sinneseindrücke des virtuellen Objekts an den Nutzer ausgeben, auf das Eingabegerät übertragen kann, welches vom Nutzer in der Hand gehalten wird. Der Nutzer fühlt dank des Roboterarms beispielsweise Gewicht und Trägheit des virtuellen Objekts, obwohl er lediglich das Eingabegerät in der Hand hält, welches selbst nur aus leichtem Plastik gefertigt ist.

Gemäß einer Ausführungsform ist an dem Flansch des Roboterarms eine Sicherheitskupplung montiert, welche eingerichtet ist, eine lösbare Verbindung mit dem Eingabegerät einzugehen. In einer Variante dieser Ausführungsform ist zwischen dem Flansch und der Sicherheitskupplung ein Kraft-Momenten-Sensor angeordnet.

In einer Weiterbildung ist das Eingabegerät ein VR-Controller, ein Datenhandschuh oder ein Joystick.

Gemäß einer Ausführungsform umfasst die Anordnung ein Tracking-System, welches zur Ermittlung einer Pose des Eingabegeräts eingerichtet ist. Weiterhin ist die Recheneinheit programmiert, den Flansch so zu positionieren, dass die Verbindung des Eingabegeräts mit dem Flansch herstellbar ist.

Diese Ausführungsform ermöglicht es, den Roboterarm so auszurichten, dass das Eingabegerät an den Flansch andocken kann.

In einer Weiterbildung ist der Roboterarm mit einer Platte als Effektor ausgerüstet. Die Weiterbildung ist eingerichtet für eine Berührung einer Oberfläche des virtuellen Objekts durch den Nutzer, indem die Recheneinheit programmiert ist, durch geeignete Ansteuerung des Roboterarms eine Oberfläche der Platte deckungsgleich zur Oberfläche des virtuellen Objekts zu positionieren.

Gemäß dieser Weiterbildung wird also zumindest ein Roboterarm zusätzlich mit einer Platte ausgestattet, die der Roboterarm in jeder beliebigen Pose halten kann, um eine entsprechende Oberfläche des virtuellen Objekts zu simulieren.

Die Platte ermöglicht sowohl die Ausgabe taktiler und/oder haptischer Sinneseindrücke eines statischen virtuellen Objekts, insbesondere einer Wand oder eines Einrichtungsgegenstands, Werkstücks oder Werkzeugs, als auch eines bewegten virtuellen Objekts, insbesondere eines Avatars, an den Nutzer. Indem die Platte durch den Roboterarm geeignet positioniert wird, kann der Nutzer taktil und/oder haptisch wahrnehmen, wie er in der virtuellen Realität eine Wand, einen Einrichtungsgegenstand oder einen Avatar rempelt; Weiterhin kann er beliebige ebene Oberflächen virtueller Objekte berühren, etwa vertikale Wandoberflächen oder eine horizontale Tischoberfläche.

In einer besonderen Weiterbildung ist die Recheneinheit programmiert zur Verschiebung des virtuellen Objekts in der virtuellen Realität bei Druck des Nutzers auf die Platte oder bei einem Ergreifen und Ziehen einer Kante der Platte durch den Nutzer.

Diese Weiterbildung ermöglicht dem Nutzer eine schnelle und einfache Interaktion mit der virtuellen Realität. Beispielsweise könnte ein Architekt durch kräftigen Druck mit beiden Händen auf die Platte Wände als virtuelle Objekte verschieben, ein Innenausstatter virtuelle Möbel verrücken oder die Höhe einer virtuellen Arbeitsplatte ergonomisch einstellen, indem er die Kante der Platte ergreift und gegen einen Widerstand anhebt. Derartige Interaktionen mit virtuellen Objekten sind auch im Rahmen aller anderen Ausführungsformen und Weiterbildungen möglich, wobei hierzu gegebenenfalls gesonderte Eingabegeräte genutzt werden.

Gemäß einer Ausführungsform verfährt das Translationsmittel den Roboterarm horizontal derart, dass dieser in Reichweite des Nutzers bleibt, während der Nutzer sich fortbewegt, oder erneut in Reichweite des Nutzers gelangt, nachdem dieser sich fortbewegt hat.

In einer Weiterbildung verarbeitet die Recheneinheit Interaktionen des Nutzers, bei welchen dieser das virtuelle Objekt mit einem Eingabegerät abtastet, während er sich fortbewegt und das Eingabegerät mit dem Roboterarm verbunden ist. Die Recheneinheit steuert den Roboterarm an, um taktile und/oder haptische Sinneseindrücke des Abtastens an den Nutzer auszugeben.

Diese Weiterbildung ist dahingehend zu verstehen, dass die Recheneinheit programmiert ist, um derartige Nutzerinteraktionen zu ermöglichen.

Gemäß einer Ausführungsform verarbeitet die Recheneinheit eine Interaktion des Nutzers, bei welcher dieser das virtuelle Objekt ergreift, indem er ein Eingabegerät ergreift und/oder bedient, welches mit dem Roboterarm verbunden ist. Die Recheneinheit verarbeitet Interaktionen des Nutzers, bei welchen dieser mit dem virtuellen Objekt ein weiteres virtuelles Objekt abtastet, während er sich fortbewegt. Weiterhin steuert die Recheneinheit den Roboterarm an, um taktile und/oder haptische Sinneseindrücke des Abtastens an den Nutzer auszugeben.

Diese Ausführungsform ist dahingehend zu verstehen, dass die Recheneinheit programmiert ist, um derartige Nutzerinteraktionen zu ermöglichen.

In einer Weiterbildung bindet die Recheneinheit mehrere Nutzer in die virtuelle Realität ein, welche das virtuelle Objekt gemeinsam handhaben, wobei an jeden der Nutzer taktile und/oder haptische Sinneseindrücke des virtuellen Objekts ausgegeben werden.

Die vorliegende Weiterbildung bietet den Vorteil, dass mehrere Nutzer das virtuelle Objekt gemeinsam tragen können, wodurch Montageschritte für Bauteile, welche besonders schwer sind, simuliert werden können.

Gemäß einer Ausführungsform ermittelt ein Tracking-System eine Haltung des Nutzers. Die Haltung wird rechnergestützt als gesund oder ungesund klassifiziert. Sofern die Haltung als ungesund klassifiziert wurde, wird ein Warnsignal ausgegeben und/oder der Roboterarm derart angesteuert, dass der Nutzer entlastet wird.

In einer Weiterbildung berechnet die Recheneinheit anhand eines physikalischen Modells eine oder mehrere der folgenden Größen für das virtuelle Objekt: Schwerkraft, Trägheit, Reibung, Auftriebskraft, Elastizität, magnetische Anziehung und/oder Abstoßung. Die Recheneinheit steuert den Roboterarm in Abhängigkeit von den berechneten Größen an.

Gemäß einer Ausführungsform ermittelt ein Tracking-System eine Position des Nutzers, insbesondere seines Kopfes. Die Recheneinheit steuert das Translationsmittel derart an und stellt eine Kinematik des Roboterarms derart ein, dass die Hauptachsen des Roboterarms stets einen Mindestabstand zu der Position des Nutzers einhalten.

Dies bietet den Vorteil, dass die Hauptachsen des Roboterarms stets einen sicheren Abstand zu dem Nutzer einhalten. Hierdurch wird neben der objektiven Sicherheit des Nutzers auch dessen subjektives Sicherheitsgefühl erhöht.

In einer Weiterbildung ermittelt das Tracking-System eine Ausrichtung des Nutzers, insbesondere seines Kopfes oder Oberkörpers. Die Recheneinheit steuert das Translationsmittel derart an und stellt eine Kinematik des Roboterarms derart ein, dass die Hauptachsen des Roboterarms stets vor dem Nutzer angeordnet sind.

Die Weiterbildung bietet den Vorteil, dass die Hauptachsen des Roboterarms stets im Blickfeld des Nutzers angeordnet werden. Hierdurch wird das subjektive Sicherheitsgefühl des Nutzers erhöht. Auch wenn der Nutzer den Roboterarm nicht sehen kann, während er ein HMD trägt, wird das kinematische Verhalten des Roboterarms durch diese Weiterbildung berechenbarer. Der Nutzer kann den Roboterarm im Zusammenspiel mit einem anderen Nutzer beobachten, bevor er selbst das HMD aufsetzt, und sich mit dem Bewegungsverhalten des Roboterarms vertraut machen. So lernt der Nutzer, dass ihm der Roboterarm nicht in den Rücken fällt, und entwickelt ein stärkeres Vertrauen in das System.

Gemäß einer Ausführungsform stellt das Ausgabemittel den Roboterarm in der virtuellen Realität für den Nutzer visuell dar.

Für erhöhte Sicherheit und mehr Vertrauen in das System kann der Nutzer also eine virtuelle Darstellung des Roboterarms oder der Roboterarme in der virtuellen Realität sehen, währdend er beispielsweise ein HMD trägt. So kann er auch selbst Kollisionen vermeiden.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Fig. 1: eine Installation mit zwei Roboterarmen RA zur haptischen Immersion eines Nutzers N,
- Fig. 2: ein Tracking-System, welches ein Kameratracking eines Nutzers N mittels zweier Kameras K durchführt,
- Fig. 3: einen Portalroboter mit einem Rotor R, an dem zwei Roboterarme RA montiert sind,
- Fig. 4: ein Fahrzeug mit einem Rotor R, auf dem zwei Roboterarme RA montiert sind,
- Fig. 5: einen Signalfluss in einer Benutzerschnittstelle zur haptischen Immersion eines Nutzers N, und
- Fig. 6: die Darstellung aus Figur 1 mit Kenntlichmachung eines virtuellen Objekts VO, dessen Gewicht über die Roboterarme RA simuliert wird.

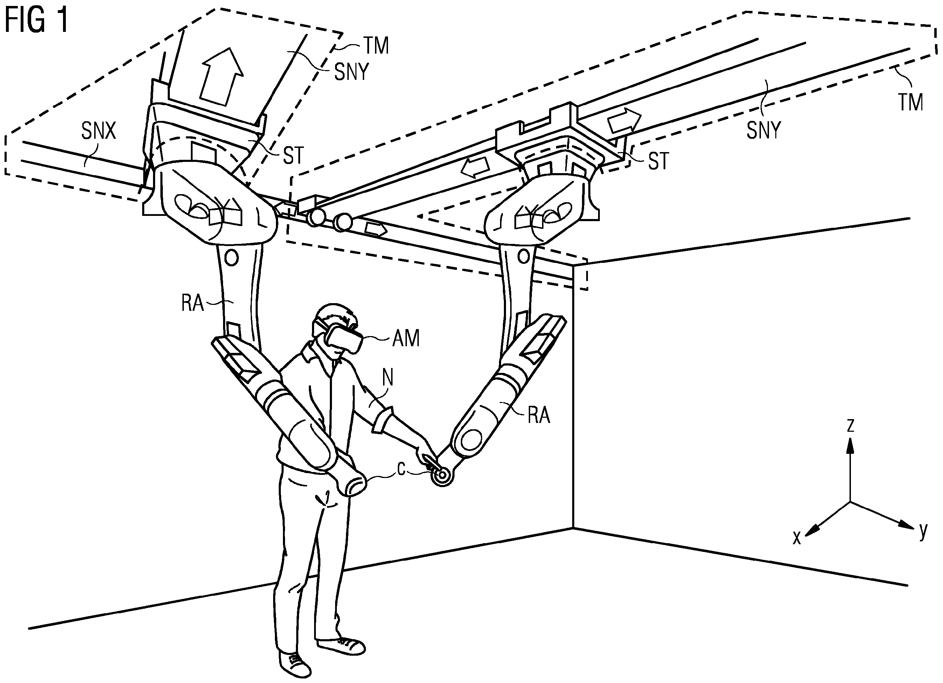

Figur 1 zeigt eine Installation zur haptischen Immersion eines Nutzers N. An zwei gegenüberliegenden Seiten einer Raumdecke sind in einer x-Richtung ausgerichtete Querführungen SNX montiert, von denen eine in Figur 1 eingezeichnet ist. Auf den Querführungen SNX sind zwei in einer y-Richtung ausgerichtete Längsführungen SNY gelagert. Die Längsführungen SNY können mithilfe geeigneter Antriebe, welche in Figur 1 nicht näher gezeigt sind, entlang der Querführungen SNX verfahren werden.

An jeder der Längsführungen SNY ist ein Schlitten ST montiert. Die Schlitten ST können mithilfe geeigneter Antriebe, welche in Figur 1 nicht näher gezeigt sind, entlang der Längsführungen SNY verfahren werden.

An jedem Schlitten ST ist ein Roboterarm RA hängend montiert. Die Gesamtheit des Schlittens ST, der zugehörigen Längsführung SNY sowie der Querführungen SNX bildet jeweils ein Translationsmittel TM aus, durch welches der jeweilige Roboterarm RA in der x-Richtung und in der y-Richtung, also in zwei translatorischen Achsen, horizontal verfahrbar ist.

Je nach gewünschtem Arbeitsraum und Freiheitsgrad kann jeder der Roboterarme RA beispielsweise vier, fünf, sechs oder sieben Achsen aufweisen. Die Roboterarme RA sind etwa sechsachsige seriell-kinematische Roboter, die mit ihrem Effektor jeden Punkt in ihrem Arbeitsraum in beliebiger Orientierung erreichen können. Das Translationsmittel TM erweitert diesen Arbeitsraum zusätzlich. Vorzugsweise werden schnelle Bewegungen vom Roboterarm RA selbst ausgeführt, während das Translationsmittel TM vergleichsweise langsame Bewegungen ausführt.

Lineareinheiten, also Linearantriebe, Führungen und Schlitten, welche sich zur Konstruktion der Translationsmittel TM eignen, sind aus dem Maschinenbau und der Robotik umfangreich bekannt. Grundsätzlich in Betracht kommen unter anderem elektrische, pneumatische oder hydraulische Linearantriebe, Linearmotoren oder Linearaktuatoren.

In einer von Figur 1 abweichenden Variante sind die beiden Schlitten ST als ein einziges Bauteil ausgebildet oder aneinander gekoppelt. Beispielsweise sind beide Roboterarme RA auf dem gleichen Schlitten montiert, welcher über Führungen und Linearantriebe sowohl in der x-Richtung als auch in der y-Richtung verfahrbar ist.

In einer Variante dient ein Portalroboter als Translationsmittel, an dem ein oder zwei Roboterarme hängend montiert sind. Die in Figur 1 gezeigten Transportmittel TM können hierbei als Sonderform eines Portalroboters verstanden werden, welche an der Decke montiert ist. Es eignen sich jedoch alle gängigen Bauformen von Portalrobotern. Weiterhin kann auch der weiter unten erläuterte Rotor mit zwei Roboterarmen an dem Portalroboter montiert werden.

Figur 1 zeigt weiterhin ein Ausgabemittel AM, hier ein HMD, welches eine virtuelle Realität visuell dreidimensional an den Nutzer N ausgibt, sodass dieser den Eindruck hat, sich räumlich innerhalb der virtuellen Umgebung zu befinden (räumliche Immersion), also räumlich zwischen Elementen der virtuellen Realität zu stehen und in die virtuelle Realität einzutauchen.

Das in Figur 1 gezeigte HMD zeigt dem Nutzer N beispielsweise ein stereoskopisches oder holographisches Bild. Alternativ können die in Figur 1 gezeigten Wände als CAVE ausgebildet werden, etwa durch abwechselnde Rückprojektion stereoskopischer Bilder von jeweils einem Projektor pro Wand oder durch simultane Projektion beider stereoskopischen Bilder von jeweils zwei Projektoren pro Wand, welche mit Polarisationsfiltern ausgerüstet sind. Der Nutzer betrachtet die Projektionen durch eine Shutter- oder Polarisationsfilterbrille. Hierbei ist es auch möglich, den Boden und die Decke als Projektionsflächen einzubeziehen.

Wenn der Blick des Nutzers auf die Roboterarme wie in Figur 1 durch ein HMD abgeschattet wird, bietet es sich an, eine virtuelle Darstellung der Roboterarme in der virtuellen Realität einzublenden, damit der Nutzer Kollisionen mit diesen vermeiden kann. Die Roboterarme können ggf. transparent dargestellt werden, um den Fokus auf die virtuellen Objekte zu erhalten. Sofern andere Vorkehrungen zur Kollisionsvermeidung getroffen werden, kann eine Visualisierung der Roboterarme ggf. entfallen.

Figur 1 zeigt weiterhin zwei Eingabegeräte C, welche der Nutzer N in der Hand hält. Die in der Figur gezeichneten Eingabegeräte C weisen einen Griff auf, welcher es dem Nutzer erlaubt, das jeweilige Eingabegerät C auch dann sicher zu halten, wenn starke Zugkräfte darauf einwirken. Die Eingabegeräte C können jedoch auch herkömmliche VR-Controller oder beliebige andere Eingabegeräte wie etwa Datenhandschuhe oder Joysticks sein.

Jedes Eingabegerät C ist mit dem Flansch eines der beiden Roboterarme RA mittelbar oder unmittelbar verbunden. Beispielsweise kann das Eingabegerät C fest mit dem Flansch verschraubt sein. Stattdessen kann der Flansch aber auch mit einem Greifer oder eine Wechselaufnahme ausgerüstet sein, die ihrerseits das Eingabegerät C erfassen und auch wieder loslassen können. Eine weitere Variante besteht darin, dass am Flansch eine Sicherheitskupplung montiert ist, welche eine lösbare Verbindung mit dem Eingabegerät C eingeht. Zwischen der Sicherheitskupplung und dem Flansch kann weiterhin ein Kraft-Momenten-Sensor platziert werden.

Eine geeignete Sicherheitskupplung sowie ein geeigneter Kraft-Momenten-Sensor sind aus dem eingangs beschriebenen Stand der Technik bekannt. Der Kraft-Momenten-Sensor arbeitet beispielsweise mit sechs Achsen und misst Kräfte und Momente in drei Dimensionen. Er ermöglicht durch die Messung von Bewegungen des Nutzers N die Berechnung von virtuellen (Reaktions-)Kräften, welche von einem virtuellen Objekt ausgeübt werden, während der Nutzer es in der virtuellen Realität berührt, ergreift oder bedient.

Die virtuellen Kräfte können hierbei bereits während der Bewegungen des Nutzers N durch geeignete Ansteuerung der Roboterarme RA in Form taktiler und/oder haptischer Sinneseindrücke an den Nutzer N ausgegeben werden. Weiterhin ermöglicht der Kraft-Momenten-Sensor, dass der jeweilige Roboterarm RA Bewegungen des Nutzers N nahezu verzögerungs- und widerstandsfrei folgt, insoweit keine Trägheit oder Reibung des virtuellen Objekts an den Nutzer N ausgegeben werden soll. Hierbei werden die Signale des Kraft-Momenten-Sensors unmittelbar in Steuersignale für Bewegungen des Roboterarms RA umgesetzt.

Eine in Figur 1 nicht näher gezeigte Recheneinheit steuert die Roboterarme RA an, um taktile und/oder haptische Sinneseindrücke eines virtuellen Objekts an den Nutzer N auszugeben. Grundsätzlich führt bereits jede beliebige Bewegung eines der beiden Roboterarme RA zu einem taktilen und/oder haptischen Sinneseindruck des Nutzers N, sobald dieser das Eingabegerät C ergriffen hat. Die Aufgabe der Recheneinheit besteht darin, die Roboterarme RA so anzusteuern, dass der Nutzer N seinen taktilen und/oder haptischen Sinneseindruck mental seiner Interaktion mit dem virtuellen Objekt zuordnet. Eine Möglichkeit besteht darin, Eigenschaften wie eine Masse des virtuellen Objekts anhand eines physikalischen Modells in Kräfte analog der Schwerkraft umzurechnen, welche über die Roboterarme RA an den Nutzer N ausgegeben werden.

Als Eingabegeräte C lassen sich auch herkömmliche VR-Controller an die Roboterarme RA anbinden, indem an deren Flansch eine für den Controller geeignete Halterung montiert wird. Dies ermöglicht es dem Nutzer N, mit dem VR-Controller virtuelle Objekte zu ergreifen, zu heben, zu tragen oder zu werfen, wobei ihm deren Größe und Masse haptisch analog zur realen Welt dargestellt wird. Mittels eines geeigneten physikalischen Modells kann ferner sichergestellt werden, dass es für den Nutzer N Kraft erfordert, virtuelle Objekte zu trennen, welche in der virtuellen Realität zusammengeklebt oder zusammengeschraubt sind. Denn in der Realität kann es sehr schwierig und kraftaufwendig sein, Bauteile voneinander zu trennen. Wenn hierbei zu viel Kraft eingesetzt wird, können andere empfindliche Bauteile beschädigt werden. Derartige Aspekte in der virtuellen Realität nachzubilden, ist im Rahmen von Trainings sehr vorteilhaft.

Einer der beiden Roboterarme RA kann jedoch auch sanft einen Oberarm des Nutzers N berühren oder den Nutzer N in diese Berührung laufen lassen, wenn dieser in der virtuellen Realität einen Avatar oder eine Wand rempelt. Auch dies resultiert in einem taktilen Sinneseindruck des Nutzers N. Hierfür ist es nicht erforderlich, dass der Nutzer N eines der Eingabegeräte C in die Hand nimmt. Natürlich müssen in einem solchen Szenario geeignete Vorkehrungen für die Sicherheit des Nutzers N getroffen werden, beispielsweise durch Ausrüstung der Roboterarme RA mit geeigneten Schutzpolstern, eine Überwachung und Beschränkung der Kollisionsgeschwindigkeit sowie einen garantierten Mindestabstand zwischen den Roboterarmen RA und dem Kopf des Nutzers N.

In einer Variante wird einer der beiden Roboterarme RA hierzu mit einer Platte als Effektor ausgerüstet. Die Recheneinheit positioniert die Oberfläche der Platte deckungsgleich zur Oberfläche des virtuellen Objekts, beispielsweise als Ausschnitt einer Wand, die der Nutzer rempelt. Durch Tracking des Nutzers kann die Platte so positioniert werden, dass der Nutzer deren ebene Oberfläche beispielsweise mit seiner Schulter streift oder berührt. Bewegt sich der Nutzer zu einem anderen Abschnitt der Wand, kann die Platte dorthin verlagert werden und eine weitere Berührung ermöglichen.

Je nach Anwendungsfall und Sicherheitsanforderungen kann die Platte beispielsweise elastisch, gepolstert oder zumindest an ihren Kanten abgerundet sein, um eine Verletzungsgefahr für den Nutzer zu minimieren.

Indem der Roboterarm die Platte eigenständig durch den Raum bewegt und den Nutzer - unter geeigneten Sicherheitsvorkehrungen - mit der Platte berührt, lassen sich auch Berührungen mit bewegten virtuellen Objekten, etwa Avataren oder Fahrzeugen, simulieren.

Weiterhin kann der Nutzer durch Druck auf die Platte oder durch Ergreifen und Ziehen einer Kante der Platte das zugehörige virtuelle Objekt bewegen, sofern dies in der jeweiligen Anwendung vorgesehen ist.

In einer in Figur 1 nicht näher gezeigten Variante verarbeitet die Recheneinheit Interaktionen des Nutzers, bei welchen dieser ein virtuelles Objekt mit einem Eingabegerät abtastet, während er sich fortbewegt und das Eingabegerät mit einem Roboterarm verbunden ist. Die Recheneinheit steuert den Roboterarm an, um taktile und/oder haptische Sinneseindrücke des Abtastens an den Nutzer auszugeben.

Das Eingabegerät ist hierbei beispielsweise ein Stift, mit welchem der Nutzer die Oberfläche eines Tisches als virtuelles Objekt abstreicht, während er an dem Tisch entlang geht. Solange der Stift über die Tischoberfläche streift, gibt der Roboterarm einen harten Widerstand als haptischen Sinneseindruck aus, während die Berührung am Ende der Tischoberfläche abreisst und der Stift nach unten abrutscht.

Diese Variante nutzt die Tatsache, dass haptische Sinneseindrücke auch dadurch gewonnen werden können, dass ein Gegenstand ergriffen und mit diesem Gegenstand eine weitere Oberfläche abgetastet wird. Wenn man beispielsweise einen Stift ergreift und mit diesem über eine unebene Oberfläche streicht, wird der zugehörige haptische Sinneseindruck vom menschlichen Gehirn nicht in den Fingerspitzen, sondern an dem Punkt verortet, an dem der Stift die Oberfläche streift. Der Nutzer könnte also beispielsweise einen realen Stift ergreifen, welcher als Effektor am Flansch des Roboterarms montiert ist, und mit diesem das virtuelle Objekt haptisch abtasten, indem die Antriebe des Roboterarms geeignet angesteuert werden, um die zugehörigen haptischen Sinneseindrücke bei der Berührung des virtuellen Objekts durch den Stift auszugeben.

In einer weiteren Variante verarbeitet die Recheneinheit eine Interaktion des Nutzers, bei welcher dieser das virtuelle Objekt ergreift, indem er ein Eingabegerät ergreift und/oder bedient, welches mit einem Roboterarm verbunden ist. Die Recheneinheit verarbeitet Interaktionen des Nutzers, bei welchen dieser mit dem virtuellen Objekt ein weiteres virtuelles Objekt abtastet, während er sich fortbewegt. Weiterhin steuert die Recheneinheit den Roboterarm an, um taktile und/oder haptische Sinneseindrücke des Abtastens an den Nutzer auszugeben.

Beispielsweise ergreift der Nutzer als virtuelles Objekt die Oberkante eines virtuellen Bürostuhls, indem er seine Hände auf einen breiten Controller legt, welcher an dem Roboterarm montiert ist und als Eingabegerät dient. Den Bürostuhl kann er nun über einen virtuellen Teppichboden als weiteres virtuelles Objekt schieben, während der Roboterarm einen reibenden Widerstand des Teppichbodens als haptischen Sinneseindruck ausgibt. Wenn der Nutzer mit dem Bürostuhl über eine Türschwelle fährt, kann der Roboterarm ein Rütteln als haptischen Sinneseindruck erzeugen. Der Nutzer nimmt eine Trägheit des Bürostuhls wahr, welche in einem physikalischen Modell zum einen auf der Masse des Bürostuhls und zum anderen auf der Reibung seiner Rollen auf dem Teppichboden beruht. Für den Nutzer entsteht der taktile und/oder haptische Sinneseindruck, mit dem rollenden Bürostuhl den Boden abzutasten.

Diese Variante betrifft also den Fall, dass der Nutzer über seinen realen Griff des Eingabegeräts direkt das virtuelle Objekt ergreift und mit diesem wiederum ein weiteres virtuelles Objekt abtastet. Analog können dem Nutzer auch Sinneseindrücke ausgegeben werden, welche dieser in seinem mentalen Modell am Ende eines meterlangen virtuellen Stabes verortet, den er mit dem Eingabegerät erfasst und zum Tasten verwendet.

Die vorliegende Variante eignet sich auch bevorzugt für Szenarien, in denen der Nutzer ein virtuelles Bauteil in ein anderes virtuelles Bauteil einfädeln soll, also auch für Trainingssimulationen mit komplizierten Montageschritten.

Gemäß einer Variante der zuvor beschriebenen Ausführungsbeispiele ermittelt ein Tracking-System eine Pose eines Eingabegeräts, welches der Nutzer in der Hand hält. Die Recheneinheit positioniert einen Flansch des Roboterarms so, dass eine Verbindung des Eingabegeräts mit dem Flansch herstellbar ist.

Dieses Andocken kann vollautomatisch erfolgen. Beispielsweise ist an dem Flansch eine Wechselaufnahme oder ein Greifer montiert, welche jeweils das Eingabegerät erfassen. Alternativ ist an dem Flansch eine Sicherheitskupplung montiert, welche eine magnetische Verbindung mit dem Eingabegerät eingeht, sobald sie an das Eingabegerät herangeführt wird.

In einer Variante des in Figur 1 gezeigten Ausführungsbeispiels verfahren die Translationsmittel TM, an denen die Roboterarme RA montiert sind, diese horizontal, sodass diese stets in Reichweite des Nutzers N bleiben, während dieser sich fortbewegt, oder nach kurzer Zeit wieder in dessen Reichweite gelangen.

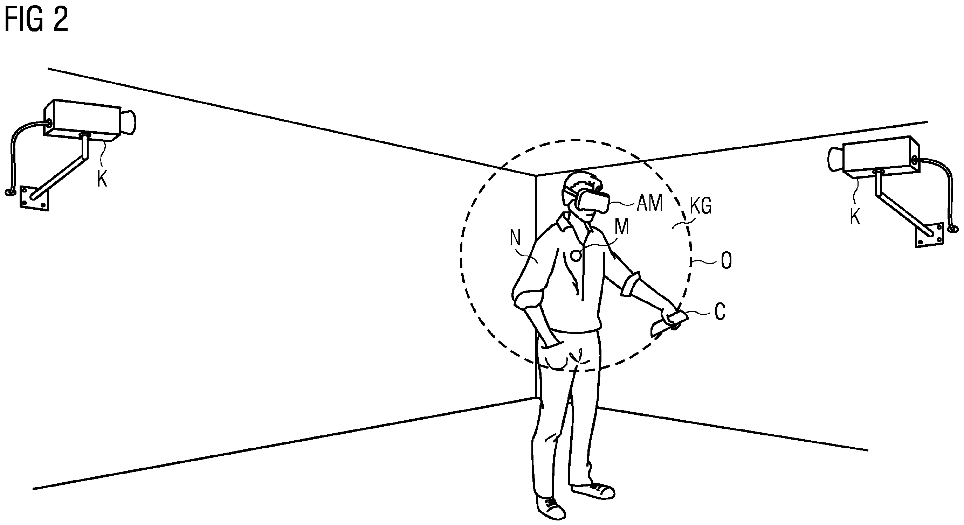

Figur 2 zeigt in diesem Zusammenhang ein Tracking-System, welches ein Kameratracking des Nutzers N mittels zweier Kameras K durchführt. Der Nutzer N kann hierzu auch visuelle Marker an seiner Kleidung tragen, welche durch das Kameratracking erfasst werden.

Das Tracking-System ermittelt beispielsweise die Position des Kopfes des Nutzers N durch ein fortlaufendes Tracking. Anstelle des Kopfes kann auch die Position des HMD verfolgt werden, welches des Nutzer N als Ausgabemittel AM trägt. Als Reichweite des Nutzers N wird nun beispielsweise die Oberfläche O einer Kugel KG definiert, deren Mittelpunkt M 20-30 cm unter der Position des Kopfes des Nutzers N liegt. Der Radius der Kugel KG wird für einen durchschnittlich großen Nutzer beispielsweise mit 60-80 cm gewählt. Der Nutzer N kann im Regelfall mit der Hand ohne weiteres jeden Punkt auf der Oberfläche O der Kugel KG berühren, auch wenn hierfür ggf. eine Rotation, Beugung oder Streckung im Oberkörper erforderlich ist. Das zuvor im Kontext der Figur 1 erläuterte Translationsmittel verfährt den Roboterarm derart, dass dessen TCP (Abkürzung für engl. "Tool Center Point", ein Referenzpunkt für den Flansch oder Effektor des Roboterarms) auf einem beliebigen Punkt der Oberfläche O der Kugel KG zu liegen kommt, wobei natürlich auch die Kinematik des Roboterarms selbst entsprechend eingestellt werden kann. So wird sichergestellt, dass der Roboterarm in Reichweite des Nutzers N bleibt, während der Nutzer N sich fortbewegt, oder erneut in Reichweite des Nutzers N gelangt, nachdem sich der Nutzer N fortbewegt hat. Dies kann für einen einzigen Roboterarm oder, wie in Figur 1 gezeigt, für zwei Roboterarme erfolgen.

Für die Definition der Reichweite des Nutzers N kann der untere Bereich der Oberfläche O der Kugel KG ausgeschlossen werden. Denn eine Positionierung des Roboterarms in diesem Bereich würde den Körper des Nutzers N zumindest berühren, ggf. sogar verletzen. Sofern der Roboterarm ausreichend sicher für die Interaktion mit dem Menschen gestaltet ist und die Anwendung dies erfordert, ist es jedoch auch möglich, einen Punkt an der Unterseite der Oberfläche O der Kugel KG anzufahren. Der Nutzer N wird dann durch die Bewegung des Roboterarms dazu veranlasst, beiseite zu gehen. Ein anderes Beispiel wäre ein Sattel als Effektor, welcher durch den Roboterarm im unteren Bereich der Oberfläche O der Kugel KG positioniert wird und sich als Sitzfläche für den Nutzer N eignet. Nach dem Aufsetzen wird der Nutzer N beispielsweise in eine Fahrsimulation in der virtuellen Realität eingebunden, wobei das virtuelle Objekt beispielsweise ein Motorrad ist. Während ein Roboterarm den Sattel hält, kann der Nutzer mit beiden Händen einen Lenker ergreifen, welcher ihm von einem weiteren Roboterarm bereitgehalten wird.

Weiterhin kann der Inhalt der Kugel KG eine besondere Schutzzone definieren, welche durch die Roboterarme unbedingt freizuhalten ist. Die Recheneinheit steuert hierzu das Translationsmittel derart an und stellt eine Kinematik des Roboterarms derart ein, dass die Hauptachsen des Roboterarms stets außerhalb der Kugel KG positioniert werden. Somit wird stets ein Mindestabstand zum Kopf und Oberkörper des Nutzers N eingehalten.

Selbstverständlich können anstelle der Kugel auch ähnliche Geometrien verwendet werden, beispielsweise ein Würfel, ein Oktaeder oder ein Ikosaeder.

Ergänzend kann noch eine Ausrichtung des Kopfes oder Oberkörpers des Nutzers N im Rahmen des Kameratrackings ermittelt werden. Dies erlaubt es, die Hauptachsen des Roboterarms stets vor dem Nutzer anzuordnen.

Geeignete Tracking-Systeme, um die Position und ggf. Ausrichtung des Kopfes des Nutzers N fortlaufend in dreidimensionalen Koordinaten zu verfolgen, sind aus dem Stand der Technik hinreichend bekannt.

Im Rahmen des Kameratrackings kann auch eine Haltung des Nutzers N ermittelt werden, welche rechnergestützt als gesund oder ungesund klassifiziert wird. Sofern die Haltung als ungesund klassifiziert wurde, kann ein Warnsignal ausgegeben werden. Außerdem kann der Roboterarm derart angesteuert werden, dass der Nutzer entlastet wird, um Schäden an dessen Wirbelsäule vorzubeugen.

Das Tracking-System kann mit den Kameras K auch eine Pose eines Eingabegeräts C ermitteln, welches der Nutzer N wie in Figur 2 gezeigt in der Hand hält. Die Recheneinheit positioniert einen Flansch des Roboterarms daraufhin so, dass dieser an das Eingabegeräts andocken kann. Die Bestimmung der hierzu erforderlichen Gelenkwinkel des Roboterarms erfolgt mittels inverser Kinematik.

Der Nutzer N kann das Eingabegerät C auch im angedockten Zustand bewegen, beispielsweise im Rahmen eines Spiels, welches der Roboterarm aufweist. Durch fortlaufendes Tracking kann eine neue Pose des Eingabegerätes C ermittelt und zur Ansteuerung des Roboterarms verwendet werden, wodurch dieser die Bewegung mit seinen Antrieben nachführt und weitläufigere Bewegungen erlaubt. Natürlich kann die Bewegung des Nutzers N auch unmittelbar über einen Kraft-Momenten-Sensor am Flansch oder durch andere Sensoren des Roboterarms erfasst und für ein aktives und sofortiges Nachführen des Roboterarms verwendet werden, wodurch dessen Widerstand gegen die Bewegung des Nutzers N weiter verringert wird.

Das Eingabegerät C kann mit geeigneten Markern versehen werden, um dessen Tracking mittels der Kameras K zu ermöglichen oder zu verbessern. Alternativ zu den in Figur 2 gezeigten Kameras K kann das Tracking-System mehrere Photosensoren am Eingabegerät C und/oder am Ausgabemittel AM vorsehen, um Infrarot-Laserstrahlen von Basisstationen zu erfassen und Entfernungen zu diesen zu ermitteln. Hieraus kann eine Pose des Eingabegerätes C sowie des Kopfes des Nutzers N berechnet werden. Alternativ kann weiterhin kann auch eine TOF-Kamera für das Tracking eingesetzt werden, welche stationär in der Umgebung montiert ist und den Nutzer N sowie das Eingabegerät C erfasst. Alternativ kann die TOF-Kamera auch am Ausgabemittel AM montiert sein und neben dem Eingabegerät C und der Umgebung des Nutzers N auch den Roboterarm erfassen und tracken.

Die Genauigkeit des Tracking-Systems und in der Folge der Pose des Eingabegeräts C kann unzureichend sein, um den Roboterarm so exakt zu positionieren, dass er an das Eingabegerät C andocken kann. Weiterhin besteht auch die Möglichkeit, dass der Roboterarm absolute Koordinaten nicht mit hinreichender Genauigkeit anfahren kann. Diese Probleme lassen sich dadurch lösen, dass der Roboterarm anhand der Informationen des Tracking-Systems lediglich grob positioniert wird und die Feinpositionierung zum Andocken an das Eingabegerät C selbst übernimmt. Hierzu sind aus dem Stand der Technik geeignete Verfahren bekannt. Beispielsweise kann der Roboterarm selbst im Bereich seines Flansches mit einem kamerabasierten Tracking zur Feinpositionierung ausgerüstet werden. Alternativ kann neben dem Eingabegerät C auch der Roboterarm vom Tracking-System, also beispielsweise den in Figur 2 gezeigten Kameras K, erfasst werden, sodass dessen absolute Koordinaten zur Verfügung stehen. Dies ermöglicht eine genaue Positionierung des Roboterarms in absoluten Koordinaten und/oder eine fortlaufende Kalibrierung der Robotersteuerung.

Ferner besteht auch die Möglichkeit, dass das Eingabegerät C von Haus aus fest an den Roboterarm angedockt ist. Der Nutzer muss in diesem Fall selbst zum Roboterarm gehen und das Eingabegerät C ergreifen, oder der Roboterarm kann das Eingabegerät C zum Ergreifen an den Nutzer N heranfahren, indem er es in Reichweite des Nutzers N auf der Oberfläche O der Kugel KG positioniert. Hierbei kann das Tracking-System auch die Position einer Hand des Nutzers N ermitteln, woraufhin der Roboterarm das Eingabegerät C in die Hand des Nutzers N legt.

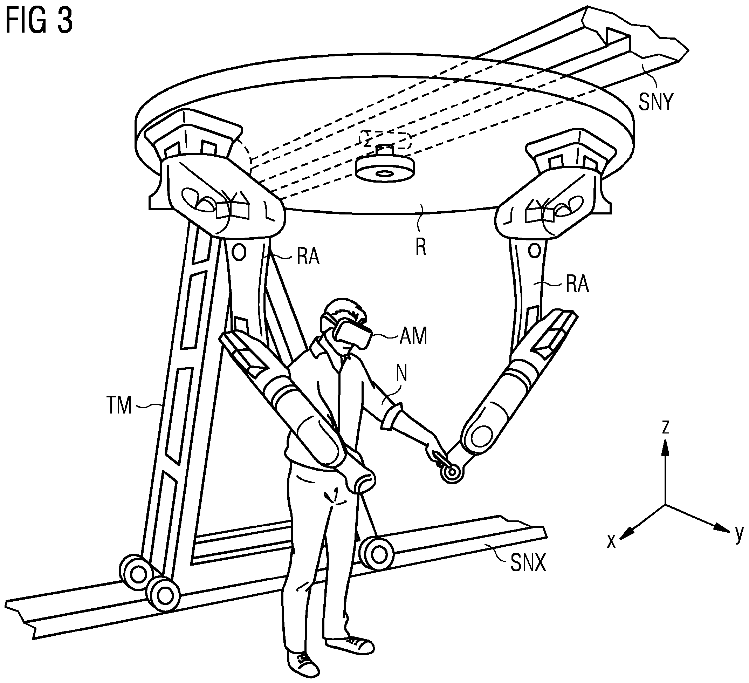

Figur 3 zeigt als Translationsmittel TM einen Portalroboter in vereinfachter Darstellung. Der Portalroboter ist auf Querführungen SNX, von denen eine in Figur 3 eingezeichnet ist, in einer x-Richtung verfahrbar. Entlang einer Längsführung SNY des Portalroboters ist ein Rotor R in einer y-Richtung verfahrbar, an dem zwei Roboterarme RA montiert sind, welche mit einem Nutzer N, der ein Ausgabemittel AM trägt, wie zuvor beschrieben zusammenwirken.

Der Rotor R ist über einen eigenen Antrieb um eine vertikale Achse drehbar. Die Roboterarme RA sind zueinander beabstandet hängend am Rotor R montiert. Während der Nutzer N auf und ab geht, bewegt sich der Portalroboter über ihm mit und richtet den Rotor R bei Drehungen des Nutzers N entsprechend aus, sodass eine Gerade, welche durch die Basen der beiden Roboterarme RA verläuft, in etwa parallel zu einer Gerade verläuft, welche durch die Schultern des Nutzers N verläuft.

Um die Ausrichtung des Oberkörpers des Nutzers N zu ermitteln, kann eines der Tracking-Systeme verwendet werden, welche im Kontext der Figur 2 erläutert wurden. Weiterhin kann auch ein Motion-Capture-System als Tracking-System zum Einsatz kommen, welches an den Schultern des Nutzers N angebrachte Marker mit den in Figur 2 gezeigten Kameras verfolgt.

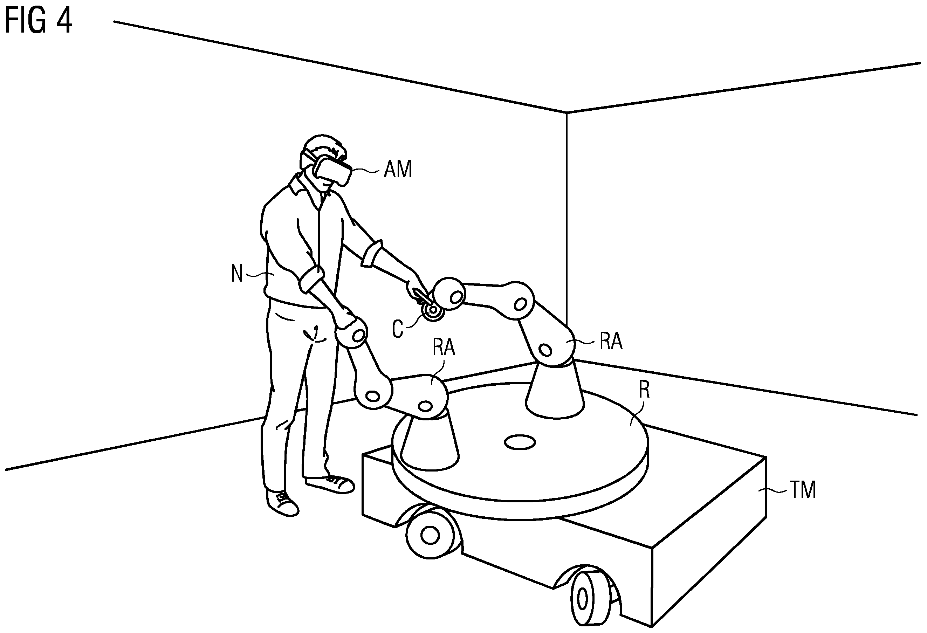

Figur 4 zeigt ein Fahrzeug als Translationsmittel TM, auf dem zwei Roboterarme RA montiert sind. Die beiden Roboterarme RA sind auf einem Rotor R montiert, welcher gegenüber dem Fahrzeug um eine vertikale Achse gedreht werden kann. Natürlich könnte auch lediglich ein Roboterarm unmittelbar auf dem Fahrzeug selbst montiert sein.

Das Fahrzeug selbst profitiert von einer flexiblen Lenkung, da es vorzugsweise stets vor den Nutzer N fährt und den Rotor R so dreht, dass die Basen beider Roboterarme RA parallel vor den Schultern des Nutzers N liegen. Es ist beispielsweise ein autonomes Fahrzeug mit einem Elektroantrieb und einem Akkumulator. Es umfasst ferner Sensoren und eine Steuereinheit, welche für eine Fahrwegüberwachung, einen Kollisionsschutz und/oder eine Navigation eingerichtet sind.

Anders als in Figur 4 dargestellt, wird das Fahrzeug vorzugsweise mit einem omnidirektionalen Antrieb und/oder omnidirektionalen Rädern ausgerüstet, damit es sich möglichst frei um den Nutzer bewegen kann.

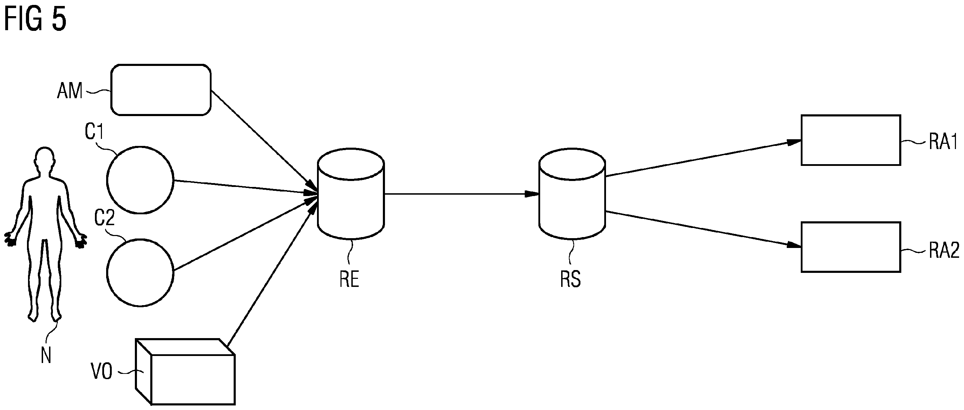

Figur 5 zeigt einen Signalfluss in einer Benutzerschnittstelle zur haptischen Immersion eines Nutzers N, wie sie bereits in den bisherigen Ausführungsbeispielen erläutert wurde.

Ein Nutzer N trägt als Ausgabemittel AM ein HMD und hält einen ersten Controller C1 und einen zweiten Controller C2 in den Händen, deren Position und Beschleunigung jeweils von einem Tracking-System ermittelt und an eine Recheneinheit RE kommuniziert wird. Die Recheneinheit RE greift weiterhin auf ein physikalisches Modell zu, welches für ein virtuelles Objekt VO eine Position, eine Beschleunigung, ein Gewicht und/oder eine Kraft bereitstellt. Die Recheneinheit RE berechnet aus all diesen Informationen eine Position, eine Beschleunigung, ein Gewicht und/oder eine Kraft, mit welcher sie mittels einer Robotersteuerung RS einen ersten Roboterarm RA1 und einen zweiten Roboterarm RA2 derart ansteuert, dass diese taktile und/oder haptische Sinneseindrücke des virtuellen Objekts VO an den Nutzer N ausgeben. Die Robotersteuerung stellt hierzu Position und Ausrichtung eines Flansches oder eines Effektors der Roboterarme RA1, RA2 entsprechend ein.

Auf diese Weise kann die Recheneinheit taktile und/oder haptische Sinneseindrücke des virtuellen Objekts VO an den Nutzer N ausgeben, als ob dieses eine eigene Masse hätte, welche der Schwerkraft unterliegt und als Gewicht für den Nutzer N wahrnehmbar wird. Das physikalische Modell stellt hierzu Werte für eine Beschleunigung und/oder Geschwindigkeit des virtuellen Objekts VO bereit. Die virtuellen Kräfte, welche für das virtuelle Objekt VO berechnet werden, werden durch die Robotersteuerung RS als reale Kräfte mittels der Roboterarme RA1, RA2 auf die Controller C1, C2 übertragen, welche der Nutzer N in der Hand hält. Um die Einwirkung der Schwerkraft auf das virtuelle Objekt VO abzubilden, werden entsprechende Beschleunigungsvektoren für die Controller C1, C2 berechnet, welche das Gewicht abbilden, mit dem das virtuelle Objekt VO die Controller C1, C2 zu Boden zieht, und von der Robotersteuerung RS zur Berechnung der Gelenkstellungen der Roboterarme RA1, RA2 herangezogen. Nach entsprechender Ansteuerung durch die Robotersteuerung RS ziehen die Roboterarme RA1, RA2 die Controller C1, C2 in Richtung der Beschleunigungsvektoren nach unten.

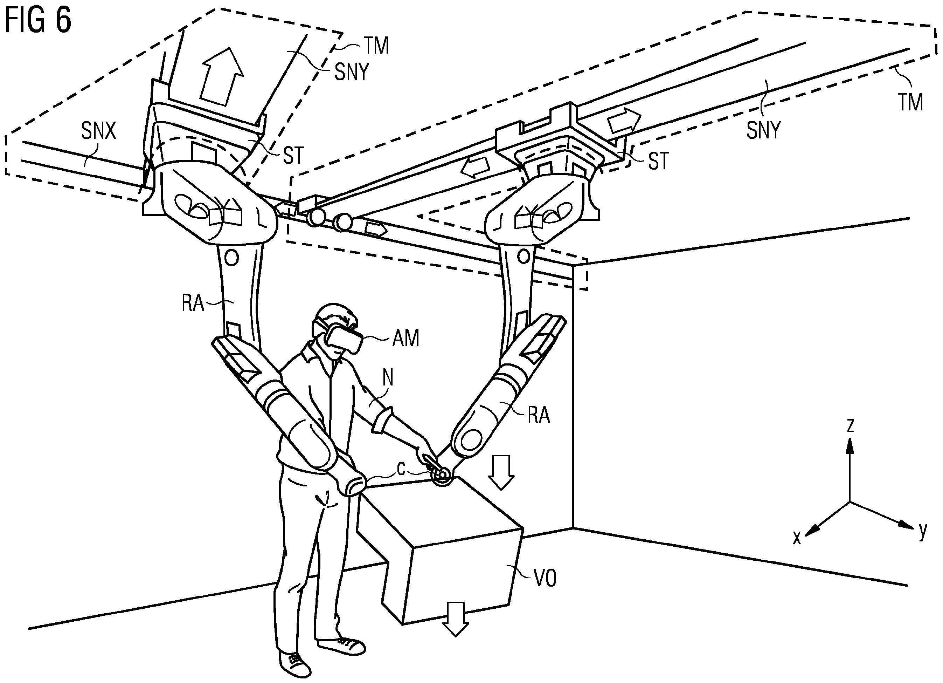

Figur 6 zeigt die Darstellung aus Figur 1 mit Kenntlichmachung eines virtuellen Objekts VO, dessen Gewicht über die Roboterarme RA simuliert wird. Der Nutzer fühlt das Gewicht in den Eingabegeräten C, welche er in den Händen hält, und welche von den Roboterarmen RA nach unten gezogen werden. Der Nutzer empfindet dies als haptischen Sinneseindruck, welchen er als das Gewicht des virtuellen Objekts VO interpretiert.

In einer Variante der bisher beschriebenen Ausführungsbeispiele kann der Nutzer N mit dem Eingabegerät C auch ein sehr großes oder schweres virtuelles Objekt VO ergreifen und haptisch seine Masse, also sein Gewicht, seinen Schwerpunkt und seine Trägheit wahrnehmen. Daneben ist es auch möglich, mit dem Eingabegerät C ein virtuelles Objekt VO lediglich zu berühren, es also abzutasten und über seine Oberfläche zu streifen, indem der Roboterarm RA Widerstand leistet, sobald das Eingabegerät C das virtuelle Objekt VO berührt. Je nach Art des virtuellen Objekts VO kann dieser Widerstand einen harten Anschlag bilden oder elastisch sein.

Auf analoge Weise können andere mechanische und elektromagnetische Kräfte in einem physikalischen Modell simuliert und als haptische Sinneseindrücke ausgegeben werden können, beispielsweise Reibung, Auftriebskraft, Elastizität, magnetische Anziehung und Abstoßung. Beispielsweise müsste der Nutzer N, um ein virtuelles Holzbrett in zwei Hälften zu brechen, zunächst Kraft gegen einen Widerstand der Roboterarme RA aufwenden und diesen überwinden, bis das virtuelle Holzbrett im physikalischen Modell bricht.

Hierbei kann auch auf weitere Verfahren zurückgegriffen werden, die im Stand der Technik als haptisches Rendern bekannt sind. Zur Kraftregelung der Roboterarme kann die Abtastrate eines ggf. vorhandenen Kraft-Momenten-Sensors sowie der Kontrollzyklus zur Steuerung der Roboterarme beispielsweise im Bereich 1 kHZ gewählt werden.

Die zuvor beschriebenen Translationsmittel können auch kombiniert werden. Beispielsweise kann ein Roboterarm an einer Linearachse oder an einem Portalroboter hängend montiert sein und der andere Roboterarm auf einem Fahrzeug.

Für alle Ausführungsbeispiele und Varianten gilt, dass jeweils auch nur ein einziger Roboterarm an einem einzigen Translationsmittel vorgesehen werden kann, und dass die Translation des Roboterarms bzw. der Roboterarme auch nur in einer Richtung, etwa der y-Richtung, erfolgen kann, indem das Translationsmittel entsprechend ausgestaltet wird.

Die Recheneinheit in den zuvor erläuterten Ausführungsbeispielen, Ausführungsformen und Weiterbildungen ist beispielsweise eine speicherprogrammierbare Steuerung, ein Mikroprozessor, eine Workstation, ein Server, ein Computernetzwerk oder eine Cloud.

Weiterhin können auch mehrere Nutzer in die virtuelle Realität eingebunden werden, welche das virtuelle Objekt gemeinsam handhaben, wobei an jeden der Nutzer taktile und/oder haptische Sinneseindrücke des virtuellen Objekts ausgegeben werden. Diese Variante macht sich den Umstand zunutze, dass das Translationsmittel den Bewegungsspielraum des Nutzers vergrößert und es ihm ermöglicht, mit einem ergriffenen virtuellen Objekt umherzugehen. Dies ermöglicht auch Trainingssimulationen von Montageschritten für Lasten, welche besonders schwer sind oder einen entfernten Schwerpunkt aufweisen, und daher nur zu zweit aufgehoben werden können. Beispielsweise wiegen bestimmte Teile industrieller Antriebe 100 kg und können nur mit großer Umsicht von mehreren Personen gleichzeitig getragen werden. Andere Bauteile sind so groß, dass deren Schwerpunkt zu weit vom Körper des Nutzers entfernt liegt, sodass diese ebenfalls nur von mehreren Personen getragen werden können. Gemäß der Variante werden mehrere Personen gemeinsam in eine kollaborative virtuelle Realität eingebunden. Damit die Roboterarme und Nutzer frei arbeiten können und der Aufbau nicht zu aufwändig wird, kann für jeden Nutzer ein separater VR-Arbeitsplatz vorgesehen werden, wobei auch Nutzer aus unterschiedlichen Standorten oder Ländern über das Internet in die kollaborative virtuelle Realität eingebunden werden können.

Die zweite am Tragen der Last beteiligte Person kann jedoch auch lediglich in der virtuellen Realität simuliert werden, während dem Nutzer über den Roboterarm die Kräfte auf seiner Seite des virtuellen Objekts ausgegeben werden.

In einer anderen Variante wird die Haltung des Nutzers durch ein geeignetes Tracking ermittelt. Sofern der Nutzer eine ungesunde Haltung einnimmt oder im Bewegungsablauf eine ungesunde Belastung für seine Muskeln, Gelenke oder Sehnen entsteht, kann dies mit einem anatomischen Modell berechnet oder mittels Mustererkennung klassifiziert und beispielsweise durch ein Warnsignal bei gleichzeitiger Entlastung des Nutzers angezeigt werden.

Die Bewegung und Steuerung des Roboterarms kann in allen beschriebenen Ausführungsbeispielen, Varianten, Ausführungsformen und Weiterbildungen auch eine Translation des Roboterarms mithilfe des Translationsmittels umfassen. Beispielsweise werden schnelle Bewegungen durch den Roboterarm selbst und langsame Bewegungen durch das Translationsmittel ausgeführt.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

## Patentansprüche

1. Anordnung zur haptischen Immersion eines Nutzers,
- mit mindestens einem Ausgabemittel (AM), eingerichtet zur visuellen Ausgabe einer virtuellen Realität an einen Nutzer (N), welche mindestens ein virtuelles Objekt (VO) enthält,
- mit mindestens einem Roboterarm (RA), welcher für einen unmittelbaren oder mittelbaren Kontakt mit dem Nutzer eingerichtet ist, und
- mit einer Recheneinheit, welche programmiert ist, durch geeignete Ansteuerung des Roboterarms taktile und/oder haptische Sinneseindrücke des virtuellen Objekts an den Nutzer auszugeben,
**gekennzeichnet durch**
- ein Translationsmittel (TM), an dem der Roboterarm montiert ist, und welches für eine horizontale Translation des Roboterarms eingerichtet ist.

2. Anordnung nach Anspruch 1,
- bei der das Translationsmittel zur Translation des Roboterarms in einer horizontalen X-Richtung und/oder in einer horizontalen Y-Richtung eingerichtet ist.

3. Anordnung nach Anspruch 2,
- bei der das Translationsmittel eine Linearachse ist, welche an einer Decke, an einer Wand oder auf einem Boden montiert ist.

4. Anordnung nach Anspruch 2,
- bei der das Translationsmittel ein Portalroboter ist, an dem der Roboterarm hängend montiert ist.

5. Anordnung nach Anspruch 2,
- bei der das Translationsmittel ein Fahrzeug ist, welches ein Fahrgestell mit einem Fahrsystem-Antrieb aufweist, welcher mittels einer Steuereinheit steuerbar ist, wobei der Roboterarm auf dem Fahrzeug montiert ist.

6. Anordnung nach Anspruch 5,
bei der das Fahrzeug zusätzlich aufweist
- einen Akkumulator, und
- Sensoren und eine Steuereinheit, welche eingerichtet sind
- für eine Fahrwegüberwachung, und/oder
- einen Kollisionsschutz, und/oder
- eine Navigation.

7. Anordnung nach einem der vorangegangen Ansprüche,
- mit zwei Roboterarmen,
- bei der die Recheneinheit programmiert ist, durch geeignete Ansteuerung der Roboterarme taktile und/oder haptische Sinneseindrücke an beide Hände des Nutzers auszugeben, und
- bei der der zweite Roboterarm ebenfalls an dem Translationsmittel montiert ist.

8. Anordnung nach Anspruch 7,
- bei der an dem Translationsmittel ein Rotor (R) montiert ist, welcher um eine vertikale Achse drehbar ist, und
- bei dem die beiden Roboterarme an dem Rotor montiert sind.

9. Anordnung nach einem der Ansprüche 1 bis 6,
- mit zwei Roboterarmen,
- bei der die Recheneinheit programmiert ist, durch geeignete Ansteuerung der Roboterarme taktile und/oder haptische Sinneseindrücke an beide Hände des Nutzers auszugeben, und
- bei der der zweite Roboterarm an einem zweiten Translationsmittel montiert ist, welches für eine horizontale Translation des zweiten Roboterarms eingerichtet ist.

10. Anordnung nach Anspruch 9,
- bei der das Translationsmittel eine Linearachse oder ein Portalroboter ist, und
- bei der das zweite Translationsmittel ein Fahrzeug ist.

11. Anordnung nach einem der vorhergehenden Ansprüche,
- bei der das Ausgabemittel ein stereoskopisches Ausgabemittel, insbesondere ein HMD oder eine CAVE ist, oder
- bei der das Ausgabemittel holographisch ist.

12. Anordnung nach einem der vorhergehenden Ansprüche,
- mit mindestens einem Eingabegerät (C), eingerichtet für ein manuelles Halten durch einen Nutzer, und
- mit Mitteln für eine Verbindung des Eingabegeräts mit einem Flansch des Roboterarms.

13. Anordnung nach Anspruch 12,
- bei an dem Flansch des Roboterarms eine Sicherheitskupplung montiert ist, welche eingerichtet ist, eine lösbare Verbindung mit dem Eingabegerät einzugehen.

14. Anordnung nach Anspruch 13,
- bei der zwischen dem Flansch und der Sicherheitskupplung ein Kraft-Momenten-Sensor angeordnet ist.

15. Anordnung nach einem der Ansprüche 12 bis 14,
- bei dem das Eingabegerät ein VR-Controller, ein Datenhandschuh oder ein Joystick ist.

16. Anordnung nach einem der Ansprüche 12 bis 15,
- mit einem Tracking-System, eingerichtet zur Ermittlung einer Pose des Eingabegeräts, und
- bei dem die Recheneinheit programmiert ist, den Flansch so zu positionieren, dass die Verbindung des Eingabegeräts mit dem Flansch herstellbar ist.

17. Anordnung nach einem der vorhergehenden Ansprüche,
- bei der der Roboterarm mit einer Platte als Effektor ausgerüstet ist, und
- eingerichtet für eine Berührung einer Oberfläche des virtuellen Objekts durch den Nutzer, indem die Recheneinheit programmiert ist, durch geeignete Ansteuerung des Roboterarms eine Oberfläche der Platte deckungsgleich zur Oberfläche des virtuellen Objekts zu positionieren.

18. Anordnung nach Anspruch 17,
bei der die Recheneinheit programmiert ist zur Verschiebung des virtuellen Objekts in der virtuellen Realität bei Druck des Nutzers auf die Platte oder bei einem Ergreifen und Ziehen einer Kante der Platte durch den Nutzer.

19. Verfahren zur haptischen Immersion eines Nutzers,
- bei dem mindestens ein Ausgabemittel (AM) eine virtuelle Realität (VR) an einen Nutzer (N) visuell ausgibt, welche mindestens ein virtuelles Objekt (VO) enthält,
- bei dem mindestens ein Roboterarm (RA) zumindest vorübergehend einen unmittelbaren oder mittelbaren Kontakt mit dem Nutzer eingeht, und
- bei dem eine Recheneinheit (RE) durch geeignete Ansteuerung des Roboterarms taktile und/oder haptische Sinneseindrücke des virtuellen Objekts an den Nutzer ausgibt, **dadurch gekennzeichnet, dass**
- ein Translationsmittel (TM), an dem der Roboterarm montiert ist, diesen horizontal verfährt.

20. Verfahren nach Anspruch 19,
- bei dem das Translationsmittel den Roboterarm derart horizontal verfährt, dass dieser in Reichweite des Nutzers bleibt, während der Nutzer sich fortbewegt, oder erneut in Reichweite des Nutzers gelangt, nachdem sich der Nutzer fortbewegt hat.

21. Verfahren nach Anspruch 20,
- bei dem die Recheneinheit Interaktionen des Nutzers verarbeitet, bei welchen dieser das virtuelle Objekt mit einem Eingabegerät abtastet, während er sich fortbewegt und das Eingabegerät mit dem Roboterarm verbunden ist, und
- bei dem die Recheneinheit den Roboterarm ansteuert, um taktile und/oder haptische Sinneseindrücke des Abtastens an den Nutzer auszugeben.

22. Verfahren nach Anspruch 20,
- bei dem die Recheneinheit eine Interaktion des Nutzers verarbeitet, bei welcher dieser das virtuelle Objekt ergreift, indem er ein Eingabegerät ergreift und/oder bedient, welches mit dem Roboterarm verbunden ist,
- bei dem die Recheneinheit Interaktionen des Nutzers verarbeitet, bei welchen dieser mit dem virtuellen Objekt ein weiteres virtuelles Objekt abtastet, während er sich fortbewegt, und
- bei dem die Recheneinheit den Roboterarm ansteuert, um taktile und/oder haptische Sinneseindrücke des Abtastens an den Nutzer auszugeben.

23. Verfahren nach einem der Ansprüche 19 bis 22,
- bei dem die Recheneinheit mehrere Nutzer in die virtuelle Realität einbindet, welche das virtuelle Objekt gemeinsam handhaben, wobei an jeden der Nutzer taktile und/oder haptische Sinneseindrücke des virtuellen Objekts ausgegeben werden.

24. Verfahren nach einem der Ansprüche 19 bis 23,
- bei dem ein Tracking-System eine Haltung des Nutzers ermittelt,
- bei dem die Haltung rechnergestützt als gesund oder ungesund klassifiziert wird, und
- bei dem ein Warnsignal ausgegeben wird und/oder der Roboterarm derart angesteuert wird, dass der Nutzer entlastet wird, sofern die Haltung als ungesund klassifiziert wurde.

25. Verfahren nach einem der Ansprüche 19 bis 24,
- bei dem die Recheneinheit anhand eines physikalischen Modells eine oder mehrere der folgenden Größen für das virtuelle Objekt berechnet:
- Schwerkraft,
- Trägheit,
- Reibung,
- Auftriebskraft,
- Elastizität,
- magnetische Anziehung und/oder Abstoßung, und
- bei dem die Recheneinheit den Roboterarm in Abhängigkeit von den berechneten Größen ansteuert.

26. Verfahren nach einem der Ansprüche 19 bis 25,
- bei dem ein Tracking-System eine Position des Nutzers, insbesondere seines Kopfes, ermittelt, und
- bei dem die Recheneinheit das Translationsmittel sowie eine Kinematik des Roboterarms derart einstellt, dass die Hauptachsen des Roboterarms stets einen Mindestabstand zu der Position des Nutzers einhalten.

27. Verfahren nach Anspruch 26,
- bei dem das Tracking-System eine Ausrichtung des Nutzers, insbesondere seines Kopfes oder Oberkörpers, ermittelt, und
- bei dem die Recheneinheit das Translationsmittel derart ansteuert sowie eine Kinematik des Roboterarms derart einstellt, dass die Hauptachsen des Roboterarms stets vor dem Nutzer angeordnet sind.

28. Verfahren nach einem der Ansprüche 19 bis 27,
- bei dem das Ausgabemittel den Roboterarm in der virtuellen Realität für den Nutzer visuell darstellt.
